# EUROPEAN PATENT APPLICATION

(11) **EP 4 292 483 A1**
(43) Date of publication of application: **20.12.2023**
(21) Application number: 22178556.1
(22) Date of filing: 13.06.2022
(51) Int. Cl.: A47J 43/07

(54) **BOWL FOR A FOOD PROCESSOR**

(71) Applicant: BSH Hausgeräte GmbH, 81739 München (DE)
(72) Inventor: Mejac, Matej, 1431 Dol pri Hrastniku (SI); Brecko, Ales, 3000 Celje (SI); Cater, Matej, 3301 Petrovce (SI)

(57) **Abstract**

The present invention relates to the bowl for a food processor with a bowl body (1) and a foot portion (2) comprising bayonet pins (3) to be connected to a bayonet receptacle of a food processor. To allow that the bowl body is made from glass or ceramics it is proposed that the bowl body (1) comprises a foot section (4) and that the pins (3) are provided on a separate subassembly, that is affixed to said foot section (4). Like this it is possible that the bowl body (1) and the separate subassembly are made from different materials. Thus, a bowl for a food processor is achieved that can be formed mainly from materials as glass or ceramics etc. but can be used with a food processor that needs elements of small dimensions and tight tolerances nevertheless.

## Description

### AREA OF THE INVENTION

The present invention relates to the bowl for a food processor with a bowl body and a foot portion comprising bayonet pins to be connected to a bayonet receptacle of a food processor.

### STATE OF THE ART

Food processors for households are generally known. Such food processors or kitchen machines are usually provided with a bowl within that a tool for the food processing is rotated by a motor. Instead of a bowl the food processor as well can be provided with a jug. For the present application the term bowl therefore shall include jugs etc. The tool of the food processor can either be a kneading hook for e.g. kneading dough or a blender knife or a grater or the like.

To achieve the processing there must be a relative movement between the tool and the bowl. Therefore, it is of importance to prevent the bowl from rotating together with the tool when food is processed. To achieve this, it is known to attach the bowl to the food processor in a non-rotatable manner.

Therefore, bayonet receptacles are commonly used as they give the possibility to easily disconnect the bowl from the food processor after the food processing is done.

To connect a bowl to such a bayonet receptacle the bowl is placed with a foot portion, that is provided at the bottom of the bowl, onto or into said bayonet receptacle. Then the bowl is turned within the receptacle, so that bayonet pins at the foot portion lock into bayonet grooves provided at the bayonet receptacle.

These bayonet grooves can be equipped with a bowl recognition system that allows for a use of the tool only when a bowl is present. This improves the security of the food processor.

A disadvantage of such an embodiment is that it requires tight tolerances for the foot portion and the necessity to form small features as the pins that are provided on the foot portion. These tight tolerances and small features cannot be achieved with all materials. Especially with glass or ceramic or some thermosetting plastics such tight tolerances or small features cannot be produced.

On the other side there is a demand of customers to have bowls from these materials as these materials stand for the durability of the food processor.

### SUBJECT OF THE INVENTION

Accordingly, the subject of the present invention is to provide a bowl for a food processor that can be produced from the mentioned materials and offers the possibility to use it with the food processors as discussed above. This is to be achieve in a cost-effective way as the market for food processors is cost sensitive.

### SUMMARY OF THE INVENTION

To achieve the subject of the present invention it is proposed to provide the bowl body with a foot section and to provide the pins on a separate subassembly that is affixed to said foot section.

The invention has the advantage that by using a separate subassembly this can be made from a material that is more appropriate to be formed with tight tolerances and to form small features. Like this the relevant parts of the subassembly can be formed e.g. from metal while the bowl body is formed from glass or ceramics.

### PREFERRED EMBODIMENTS OF THE INVENTION

Preferred embodiments with features that can be used either alone or in combination with each other are subject of the dependent claims. Any reference numbers in the claims are considered not to be restrictive but intended only to improve the legibility of the claims.

In a preferred embodiment the subassembly comprises a compression element acting on the foot section of the bowl body. Thus, the subassembly can be safely mounted on the bowl body.

It's furthermore proposed to provide at least one protrusion on the foot section of the bowl or on the compression element that interacts with the opposing part, like this preventing a relative rotation of these two elements.

The contact between the compression element and the foot section can be realised through at least one elastic element. This gives the advantage that tolerances of the foot section can be compensated easily by the compression element.

With a preferred embodiment of the invention there is provided a gasket between the compression element and the bowl body. This has the advantage that the bowl with mounted subassembly is still dishwasher safe.

The subassembly can comprise a bottom cover that is carrying the pins and is connected to the compression element. This facilitates the production of the subassembly.

In an especially preferred embodiment the bottom cover is made from durable material, namely metal. This as well improves the durability of the whole bowl.

In a further preferred embodiment the connection between the bottom cover and the compression element is effected with screws and interjacent sealings. This construction allows for an easy mounting and through the sealings furthermore the demanded dishwasher safety.

The compression element is preferably made of plastic or aluminum.

### SHORT DESCRIPTION OF THE DRAWINGS

Further features and advantages can be learned from the following description of the figures that show a preferred embodiment but shall not be understood as being limiting for the present application and in which
- Fig. 1: shows a perspective view of a bowl for a food processor in a turned over position;
- Fig. 2: shows the bowl for a food processor of Fig 1. in an exploded view;
- Fig. 3: shows a cross-section through a foot section of a bowl with an affixed sub-assembly in horizontal orientation;
- Fig. 4: shows a cross-section through a foot section of a bowl with an affixed sub-assembly in vertical orientation.

### DETAILED DESCRIPTION OF THE DRAWINGS

In the following description of a preferred embodiment same reference numbers are used for same parts.

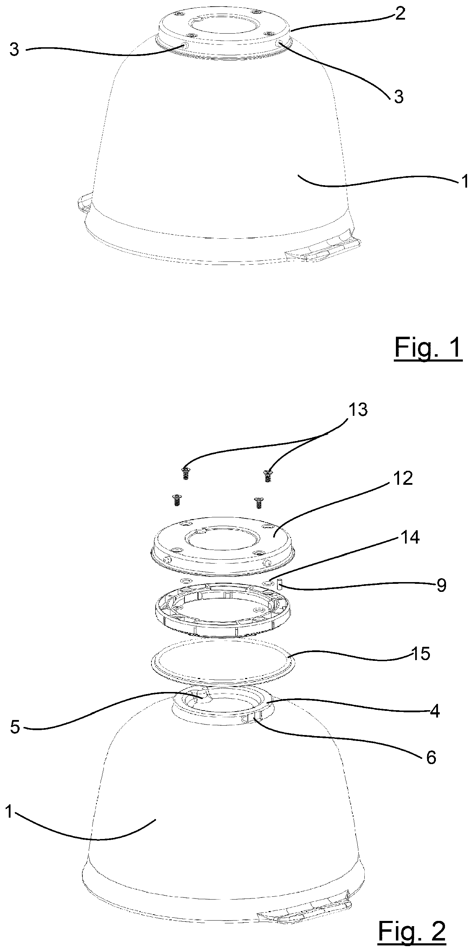

In Fig. 1 the bowl for a food processor for households or a kitchen machine is shown in an upside-down position.

The bowl comprises a bowl body 1 made from glass, ceramics or thermosetting plastics. The bowl further comprises a foot portion 2 that carries pins 3 on its cylindrical circumference.

The bowl is set with its foot portion 2 into a bayonet receptacle at the housing of the food processor. The bayonet receptacle comprises bayonet grooves into which the pins 3 lock. Like this the bowl is securely fitted into the receptacle.

The pins 3 at the same time interact with a bowl recognition system within the bayonet grooves that allows the food processor's tool to work only when a bowl is present.

As the pins are small features that are difficult to form and their interaction with the bowl recognition system requires tight tolerances the foot portion of the bowl is not formed solely from the same material as the bowl body 1, namely glass or ceramics or thermosetting plastics, but the bowl body 1 is formed with a foot section 4. Onto this foot section 4 a separate subassembly is mounted that carries the pins 3.

This can be seen in Fig. 2, where the bowl for a food processor as discussed above is shown in an exploded view.

The foot section 4 is formed as an integrated annular collar on the bottom of the bowl body 1. It is provided with a protrusion 5 on its inner side as well as with at least one small knob 6 on its outer side that both extend in radial direction of the annular collar.

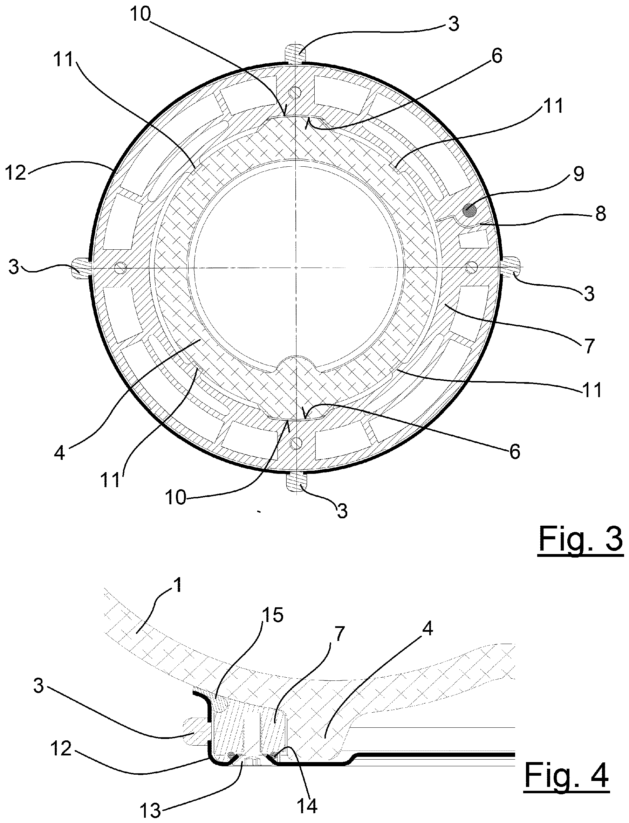

Onto the foot section 4 is mounted a compression element 7 as shown in Fig. 3. This compression element 7 has the form of a ring and has a slit 8. By closing this slit 8 the ringlike compression element 7 is narrowed and like this the compression element 7 is pressed in radial direction against the circumference of the foot section 4. To secure the closed slit 8 a locking pin 9 is set into corresponding openings provided on the ringlike compression element 7 on both sides of the slit 8.

The compression element 7 is provided with small cut-outs 10 on its inner side corresponding and interacting with the small knobs 6 mentioned above. Like this an undesirably turning of the compression element 7 placed onto the foot section 4 is prevented.

To ensure a tight sitting of the compression element 7 on the foot section 4 the compression element 7 is provided with a number of elastic elements 11. They are elastically deformable in radial direction and realize the contact between the compression element 7 and the circumference of the foot section 4 when the slit 8 within the ringlike compression element 7 is closed. This allows for a proper elastic force.

Onto and over the mounted compression element 7 is set a bottom cover 12. This is preferably formed from metal as a deep drawn article.

The bottom cover 12 carries the pins 3 that are separately formed.

To secure the bottom cover 12 to the compression element 7 screws 13 are used that are screwed into screw holes provided on the compression element 7.

To seal the gap between the screws 13 and the compression element 7 there are provided corresponding sealings in form of O-rings 14 that are situated under the heads of the screws 13 and that are squeezed into tight condition when fastening the screws 13.

As a further sealing element there is a gasket 15 provided between the compression element 7 and the bottom cover 12 on the one side and the bowl body 1 on the other side. With this gasket 15 and the sealings 14 the whole subassembly consisting of compression element 7, bottom cover 12 and the elements connected with them is attached to the bowl body 1 in a dishwasher safe form.

Like this a bowl for a food processor is achieved that can be formed mainly from materials as glass or ceramics etc. and can be used with a food processor that needs elements of small dimensions and tight tolerances.

### LIST OF REFERENCE NUMBERS

- 1.: bowl body
- 2.: foot portion
- 3.: pins
- 4.: foot section
- 5.: protrusion
- 6.: knob
- 7.: compression element
- 8.: slit
- 9.: locking pin
- 10.: cut-outs
- 11.: elastic element
- 12.: bottom cover
- 13.: screws
- 14.: sealings
- 15.: gasket

## Claims

1. Bowl for a food processor, with a bowl body (1) and with a foot portion (2) comprising bayonet pins (3) to be connected to a bayonet receptacle of a food processor,
**characterised in that**
the bowl body (1) comprises a foot section (4) and **in that** the pins (3) are provided on a separate subassembly, that is affixed to said foot section (4).

2. Bowl according to claim 1,
**characterised in that**
the bowl body (1) with its foot section (4) and the separate subassembly are made from different materials.

3. Bowl according to claims 1 or 2,
**characterised in that**
the subassembly comprises a compression element (7) acting on the foot section (4) of the bowl body (1).

4. Bowl according to claim 3,
**characterised in that**
the contact between the compression element (7) and the foot section (4) is realised through at least one elastic element (11).

5. Bowl according to one of the claims above,
**characterised in that**
a gasket (15) is provided between the separate subassembly and the bowl body (1).

6. Bowl according to one of the claims above
**characterised in that**
the subassembly comprises a bottom cover (12) carrying the pins (3) and being connected to the compression element (7).

7. Bowl according to claim 6,
**characterised in that**
the bottom cover (12) is made from durable material, namely metal.

8. Bowl according to one of the claims above
**characterised in that**
the connection between the bottom cover (12) and the compression element (7) is effected with screws (13) and corresponding sealings (14).

9. Bowl according to one of the claims above,
**characterised in that**
at least one protrusion (5, 6) is provided on the foot section (4) of the bowl body (1) or on the compression element (7) interacting between the bowl body (1) and the compression element (7) to prevent a relative rotation thereof.
